Europäisches Patentamt

European Patent Office

Office européen des brevets

(11) Veröffentlichungsnummer: **0 476 419 A2**

## (12) EUROPÄISCHE PATENTANMELDUNG

(21) Anmeldenummer: **91114815.3**

(22) Anmeldetag: **03.09.91**

(51) Int. Cl.5: **A01D 67/00, A01D 75/18**

(30) Priorität: **11.09.90 DE 4028778**
**17.04.91 DE 4112525**

(43) Veröffentlichungstag der Anmeldung:
**25.03.92 Patentblatt 92/13**

(84) Benannte Vertragsstaaten:
**AT BE CH DE DK ES FR GB IT LI LU NL SE**

(71) Anmelder: **Maschinen-Mohr Inh.: Hermann Mohr**
**Höttinger Strasse**

**W-8836 Ellingen(DE)**

(72) Erfinder: **Mohr Hermann**
**Höttinger Strasse**
**W-8836 Ellingen(DE)**

(74) Vertreter: **Patentanwälte Czowalla . Matschkur & Partner**
**Dr.-Kurt-Schumacher-Strasse 23**
**W-8500 Nürnberg 1(DE)**

(54) **Mähvorrichtung mit stossgeschütztem Chassis.**

(57) Mähvorrichtung, ankuppelbar an ein Fahrzeug, mit einem das Schneidwerk umgebenden Chassis mit einem oder mehreren Rammkörpern, die an einer Chassis-Außenseite über einen oder mehrere Stoßdämpfer- und/oder Federelemente derart beweglich gelagert sind, daß sie bei einem Stoß auf ein externes Hindernis - unter Auslenkung der Dämpfer- und/oder Federelemente - gegenüber dem Chassis verstellt werden.

FIG. 1

EP 0 476 419 A2

Die Erfindung betrifft eine Mähvorrichtung, die an ein Fahrzeug ankuppelbar ist und ein das Schneidwerk umgebendes Chassis aufweist.

Bei derartigen bekannten Mähwerken stellt sich das Problem, daß beim Mähbetrieb vom Fahrer Hindernisse im noch zu mähenden Gut nicht rechtzeitig erkannt werden. Infolgedessen wird das Mähwerk auf das Hindernis gefahren, woraus starke Stöße und Krafteinwirkungen auf die Mähwerkhalterung, insbesondere auf die Ankoppelung, den Rüstbock oder die Dreipunktaufhängung am Fahrzeug resultieren.

Mithin wird das der Erfindung zugrundeliegende Problem der Erhöhung der Betriebszuverlässigkeit und -sicherheit bei Mähwerken und insbesondere deren Schutz vor Beschädigung beim Auffahren auf unerwartete Hindernisse in der zu mähenden Landschaft aufgeworfen. Zur Lösung dieses Problem wird bei einer Mähvorrichtung mit den eingangs genannten Merkmalen erfindungsgemäß vorgeschlagen, einen oder mehrere Rammkörper vorzusehen, die an der Chassis-Außenseite über ein oder mehrere Stoß-Dämpfer und/oder Federelemente derart beweglich gelagert sind, daß sie bei einem Stoß auf ein externes Hindernis gegenüber dem Chassis verstellt werden und dabei Dämpfer- und/oder Federelemente auslenken.

Indem der Rammkörper beweglich ist, kann er beim Stoßen auf Hindernisse entsprechende Ausgleichsbewegungen durchführen. Durch die Federpufferung werden die Stösse und externen Kräfte aufgefangen, kompensiert und gegebenenfalls derart gedämpft, daß Schäden am Chassis der Mähvorrichtung weitgehend vermieden sind. Dies kann im Rahmen der Erfindung mit linear verschiebbar gelagerten und vorzugsweise mit gelenkigen, dreh- und schwenkbar angebrachten Rammkörpern erreicht werden.

Nach einer Weiterbildung der Erfindung ist der Rammkörper als Stoßstange oder Rammbügel ausgebildet, die sich längs der Chassis-Außenseite erstrecken. Mit anderen Worten, der erfindungsgemäße Rammkörper dient dem Mähwerk gleichsam als federgepufferte Stoßstange. Darüber hinaus liegen im Rahmen der Erfindung auch andere Formen für den Rammkörper: so ist z. B. eine Ausbildung als federgepuffert gelagertes Umlenkrad oder Ablenkrolle denkbar, deren Drehachsen jeweils senkrecht zum Boden gerichtet sind. Als Federelement kann dabei ein aus elastischem Material, zum Beispiel Gummireifen, gebildeter Rollen- oder Radkörper dienen. Der erzielte Vorteil besteht darin, daß beim Aufstoßen auf ein externes Hindernis neben der Stoßdämpfung gleichzeitig eine Richtungsveränderung für die fahrbare Mähvorrichtung bzw. deren Trägerfahrzeug herbeigeführt werden kann, indem sich die Ablenkrolle oder das Umlenkrad an dem Hindernis abwälzen.

Nach einer weiteren Ausbildung der Erfindung ist der Rammkörper über ein gefedertes Hebel- und/oder Schwenkgestänge am Chassis angelenkt. Diese schwenkbare Anbringung kann Platz sparen und kompakt ausgeführt sein, insbesondere ergeben sich keine längserstreckenden Linearbewegungen. In Weiterführung dieses Gedankes ist zwischen Chassis und Hebel- und/oder Schwenkelement ein Federelement geschaltet, welches dann der durch externe Hindernisse verursachten Schwenkbewegung entgegenwirken kann.

Eine bevorzugte konstruktive Realisierung des Erfindungsgedankens besteht darin, daß ein zweiarmiger Hebel vorgesehen wird, der an einem vom Chassis auskragenden Ausleger angelenkt ist, mit seinem ersten, vorzugsweise unteren Arm den Rammkörper trägt und mit seinem zweiten, vorzugsweise oberen Arm über ein oder mehrere Federelemente mit dem Chassis verbunden ist. Diese Konstruktion entspricht dem Grundgedanken des Einsatzes eines gefederten Hebelgestänges.

Vor allem für die genannte Konstruktion sind Federelemente in Form von vorzugsweise zylindrischen Gummihohlfedern vorteilhaft: diese lassen sich leicht mit dem Chassis verbinden, beispielsweise indem sie von einem ortsfest fixierten Halterungsschuh umfaßt sind.

Um eine stabile Verbindung zwischen dem Rammkörper und dem Federelement zu schaffen, ist nach einer Ausbildung der Erfindung ein das Federelement hintergreifender und durchsetzender Spannbolzen vorgesehen, der mit den Bewegungen des Rammkörpers gekoppelt ist. In konkreter Ausgestaltung kann der Spannbolzen mit seinem einen Ende mit einer Platte versehen sein, die gegen eine Stirnseite des Federelementes drückt; mit seinem anderen Ende kann er entweder direkt mit dem Rammkörper oder mit diesem mittelbar über das (oben genannte) Hebel- und/oder Schwenkgestänge - dort z. B. angeschraubt - verbunden sein.

Zweckmäßig ist eine Anbringung des oder der Rammkörper an der in Fahrtrichtung gesehenen Vorder- oder Frontseite der Mähvorrichtung und/oder an den Ecken des Chassis; letzteres ist vor allem dann vorteilhaft, wenn die Rammkörper als Abweisrollen (siehe oben) ausgeführt sind.

Weitere Vorteile, Merkmale und Einzelheiten auf der Basis der Erfindung ergeben sich aus der nachfolgenden Beschreibung eines Ausführungsbeispiels der Erfindung sowie anhand der Zeichnung. Darin zeigen:

Fig. 1    eine Ansicht auf die - in Fahrtrichtung gesehen - rechte Seite einer Mähvorrichtung mit einem erfindungsgemäßen Rammbügel und

Fig. 2    eine vergrößerte und teilweise geschnittene Darstellung des Bereich II in Fig. 1.

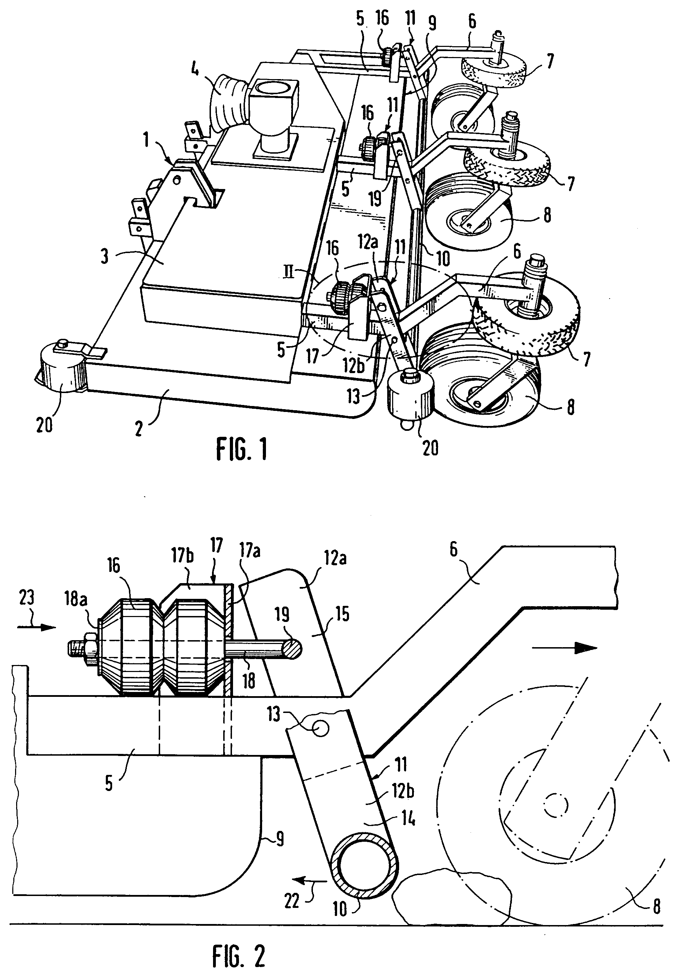

In Fig. 1 ist ein verfahrbares Mähwerk von seitlich-oben gezeigt, welches an seiner Rückseite ein Kupplungsgerät 1 zum Anbringen an die gegebenenfalls hydraulisch heb- und senkbare Dreipunktaufhängung eines Nutzfahrzeugs aufweist. Auf dem Rahmengehäuse 2 des Mähwerks ist ein Antriebsgehäuse 3 für das Antriebsaggregat aufgesetzt. Das Antriebsgehäuse 3 trägt auf seiner Oberseite einen Wellenanschluß 4 für eine Verbindungswelle von einem (nicht gezeigten) Fahrzeug. Im Frontbereich des Rahmengehäuses 2 und/oder Antriebsgehäuses 3 sind gemäß gezeichnetem Beispiel drei Träger 5 ortsfest fixiert, die jeweils in Fahrtrichtung vorspringende Auslegerabschnitte 6 aufweisen. An den freien Enden der auskragenden Auslegerabschnitte 6 sind jeweils Umlenkräder 7 mit senkrecht zum Boden stehender Drehachse und Bodenräder 8 drehbar gelagert.

Zwischen den Bodenrädern 8 und der Front- bzw. Stirnseite 9 (vgl. Fig. 2) des Rahmengehäuses bzw. Chassis 2 ist ein Rammbügel 10 etwa parallel zur Stirnseite 9 angeordnet. Er ist aus einer zylindrischen Stange gebildet, deren Längserstreckung mit der Breite der Stirnseite 9 des Chassis 2 übereinstimmt. Vom Außenmantel des Rammbügels 10 springen je einem der Auslegerabschnitte 6 bzw. der Träger 5 zugeordnete Anlenkelemente 11 etwa schräg nach oben vor. Sie sind im speziellen Ausführungsbeispiel jeweils aus einem Paar parallel verlaufender und voneinander beabstandeter Flacheisen 12a, 12b gebildet. Die paarweise einander zugeordneten Flacheisen 12a, 12b fassen zwischen sich den Auslegerabschnitt 6 je eines Trägers 5 ein. Im Einfassungsbereich sind sowohl die Flacheisen 12a, 12b als auch der dazwischen befindliche Auslegerabschnitt 6 mit in einer gemeinsamen Flucht liegenden Bohrungen versehen, durch die ein Verbindungsbolzen, Stift oder eine Verbindungsschraube 13 zur Bildung einer Gelenkachse geführt ist. Durch diese Gelenkachse 13 wird das Anlenkelement 11 in einen ersten, unteren Hebelarm 14, der am Rammbügel 10 endet und dort befestigt ist, und einen oberen, zweiten Hebelarm 15 - oberhalb der Verbindungsschraube bzw. Gelenkachse 13 - unterteilt. Der obere Hebelarmabschnitt 15 ist von einer Gummihohlfeder 16 in Richtung zum Rahmengehäuse bzw. Chassis 2 vorgespannt. Diese liegt mit ihrer dem oberen Hebelarmabschnitt 15 nächstliegenden Stirnseite an der Basisfläche 17a eines hochkant aufgestellten Halterungsschuhs 17 an, dessen senkrecht zur Basisfläche 17a umgebogene Seitenränder 17b die Mantelfläche der Hohlfeder 16 umfassen. Die freie, dem Anlenkelement 11 abgewandte Stirnseite der Gummihohlfeder 16 ist von einem Spannbolzen 18 mittels eines an seinem Ende hin- und herschraubbaren Scheibenkragens 18a hintergriffen. Der Spannbolzen 18 durchsetzt die Gummihohlfeder 16 in ihrer Längsrichtung und ist durch die Basiswandung 17a des Halterungsschuhs 17 bis zum oberen Hebelarm 15 des Anlenkelements 11 geführt und dort befestigt. Als Befestigungsmittel dient ein Querstift 19, der durch die Flucht zweier gegenüberliegender Bohrungen in den paarweisen Flacheisen 12a, 12b geführt und mit seiner Außenmantelfläche mit dem Spannbolzenende verbunden ist.

Gemäß Fig. 1 sind etwa im Bereich der Ecken des Chassis 2 noch Ablenkrollen 20 mit senkrecht zum Boden gerichteter Drehachse gelagert. Ihre Lagerung ist zweckmäßig radial federnd ausgeführt, so daß sie - ebenso wie die Umlenkräder 7 - sowohl als federnde Stoßdämpfer als auch als Tast- und Führungsorgane dienen können, welche dem beschädigungslosen Vorbeibewegen der Mähvorrichtung entlang eines externen Hindernisses dienen.

Stößt während des Fahr- und Mähbetriebs der Rammbügel 10 auf ein externes Hindernis 21 (z. B. größerer Steinbrocken) - vgl. Fig. 2, wird ihm um die Gelenkachse 13 in Verbindung mit dem unteren Hebelarm 14 eine den Stoß ausgleichende Schwenkbewegung 22 zur Frontseite 9 des Chassis 2 hin erteilt. Diese Schwenkbewegung wird allerdings durch die Gummihohlfeder 16 gedämpft: indem deren rückwärtige Stirnseite über den Scheibenkragen 18a des Spannbolzens 18 mit dem oberen Hebelarmabschnitt 15 verbunden ist, wird sie elastisch federnd in ihrer Längsrichtung einer Druckkraft 23 unterworfen und zusammengedrückt, wenn der obere Hebelarmabschnitt 15 vom Chassis 2 weg bzw. der untere Hebelarmabschnitt 14 zum Chassis 2 hin verschwenkt werden.

Über das dargestellte Ausführungsbeispiel hinaus kann im Rahmen der Erfindung der Rammbügel 10 in seiner Höhe verstellbar ausgeführt sein. Dies kann beispielsweise durch hebelartiges Senken oder Heben der Träger 5 für die Umlenkräder 7 oder die Bodenräder 8 bewirkt werden.

**Patentansprüche**

1. Mähvorrichtung, ankuppelbar (1) an ein Fahrzeug, mit einem das Schneidwerk umgebenden Chassis, gekennzeichnet durch einen oder mehrere Rammkörper (7, 10, 20), die an einer Chassi-Außenseite über ein oder mehrere Stoß-Dämpfer- und/oder Federelemente (16) derart beweglich gelagert sind, daß sie bei einem Stoß auf ein externes Hindernis (21) - unter Auslenkung der Dämpfer- und/oder Federelemente (16) - gegenüber dem Chassis verstellt werden.

2. Mähvorrichtung nach Anspruch 1, dadurch gekennzeichnet, daß der Rammkörper (10) gelenkig (13), dreh- und/oder schwenkbar (22) gelagert ist.

3. Mähvorrichtung nach Anspruch 1 oder 2, dadurch gekennzeichnet, daß der Rammkörper als Stoßstange oder Rammbügel (10), die sich längs der Chassis-Außenseite (9) erstrecken, oder als Umlenkrad (8) oder Ablenkrolle (20) jeweils mit senkrecht zum Boden gerichteter Drehachse ausgebildet ist.

4. Mähvorrichtung nach einem der vorangehenden Ansprüche, dadurch gekennzeichnet, daß der Rammkörper (10) über ein gefedertes Hebel- und/oder Schwenkgestänge (14, 15) am Chassis (2) angelenkt ist.

5. Mähvorrichtung nach Anspruch 4, gekennzeichnet durch ein zwischen Chassis (2) und Hebel- und/oder Schwenkelement (14, 15) geschaltetes Federelement (16).

6. Mähvorrichtung nach einem der vorangehenden Ansprüche, gekennzeichnet durch einen zweiarmigen Hebel (14, 15), der an einem über das Chassis hinausragenden Ausleger (6) angelenkt ist, mit seinem ersten, vorzugsweise unteren Arm (14) den Rammkörper (10) trägt, und mit seinem zweiten, vorzugsweise oberen Arm (15) über ein oder mehrere Federelemente (16) mit dem Chassis (2) verbunden ist.

7. Mähvorrichtung nach einem der vorangehenden Ansprüche, gekennzeichnet durch eine vorzugsweise zylindrische Gummihohlfeder (16) als Federelement.

8. Mähvorrichtung nach Anspruch 7, dadurch gekennzeichnet, daß die Gummihohlfeder (16) von einem vom Chassis ortsfest abstehenden Halterungsschuh (17) umfaßt (17b) ist.

9. Mähvorrichtung nach einem der vorangehenden Ansprüche, gekennzeichnet durch einen das Federelement (16) hintergreifenden (18a) und durchsetzenden Spannbolzen (18), der mit den Bewegungen (22) des Rammkörpers (10) gekoppelt ist.

10. Mähvorrichtung nach einem der vorangehenden Ansprüche, dadurch gekennzeichnet, daß ein oder mehrere Rammkörper (10) an der in Fahrtrichtung gesehenen Vorder- oder Frontseite (9) der Mähvorrichtung und/oder an den Ecken des Chassis (2) angebracht sind.

FIG. 1

FIG. 2